# EUROPÄISCHE PATENTSCHRIFT

(11) **EP 2 160 658 B1**
(45) Veröffentlichungstag und Bekanntmachung des Hinweises auf die Patenterteilung: **26.01.2011**
(21) Anmeldenummer: 08802884.0
(22) Anmeldetag: 21.05.2008
(51) Int. Cl.: G03H 1/22

(54) **HOLOGRAPHISCHES REKONSTRUKTIONSSYSTEM MIT EINER ANORDNUNG VON STEUERBAREN MIKROZELLEN**
HOLOGRAPHIC RECONSTRUCTION SYSTEM WITH AN ARRANGEMENT OF CONTROLLABLE MICROCELLS
SYSTÈME DE RECONSTITUTION HOLOGRAPHIQUE CONSTITUÉ D'UN ENSEMBLE DE MICROCELLULES POUVANT ÊTRE COMMANDÉES

(30) Priorität: 21.05.2007 DE 102007024236
(43) Veröffentlichungstag der Anmeldung: 10.03.2010
(73) Patentinhaber: SeeReal Technologies S.A., 5365 Munsbach (LU)
(72) Erfinder: KROLL, Bo, London W148 AA (GB); SCHWERDTNER, Armin, 01279 Dresden (DE); FÜTTERER, Gerald, 01277 Dresden (DE)
(74) Vertreter: Bradl, Joachim
(86) Internationale Anmeldenummer: PCT/EP2008/056272
(87) Internationale Veröffentlichungsnummer: WO 2008/142118

(56) Entgegenhaltungen:
- WO-A-2004/075526
- WO-A-2006/119920
- NEIL R. SMITH ET AL.: "Agile wide-angle beam steering with electrowetting microprisms" OPTICS EXPRESS, Bd. 14, Nr. 14, 10. Juli 2006 (2006-07-10), XP002497446

## Beschreibung

Die Erfindung betrifft ein holographisches Rekonstruktionssystem zum dreidimensionalen Rekonstruieren einer Szene mit räumlichen Lichtmodulationsmitteln, welche eine holographische Kodierung tragen und Beleuchtungsmitteln zum Beleuchten der Lichtmodulationsmittel.

Die vorliegende Erfindung betrifft vorrangig eine Echtzeit- oder echtzeitnahe Darstellung von bewegten Szenen mittels Folgen von Videohologrammen. Ein Hologramm-Signalprozessor kalkuliert Videohologramme und kodiert diese auf einer Modulatorzellenstruktur von räumlichen Lichtmodulationsmitteln, welche beim Beleuchten mit interferenzfähigen Beleuchtungsmitteln mindestens eine Lichtwellenfront mit holographischer Information räumlich modulieren. Die modulierte Lichtwellenfront rekonstruiert durch Interferenz der Lichtwellen die Szene und breitet sich so zu einer Augenposition aus, dass ein oder mehrere Betrachter die rekonstruierten Objektlichtpunkte als dreidimensionale Rekonstruktion einer Szene wahrnehmen. Das heißt, die rekonstruierten Objektlichtpunkte geben vor den Augenpositionen die optische Erscheinung der Szene dreidimensional wieder. Bei Rekonstruktionssystemen mit geringer Auflösung der Modulatorzellen in den räumlichen Lichtmodulationsmitteln und einem reduzierten Rechneraufwand zum Kalkulieren der Videohologramme ist es vorteilhaft, die modulierte Lichtwellenfront mit Fokussiermittel auf einen Sichtbarkeitsbereich von einigen Millimetern bis zu wenigen Zentimetern zu reduzieren. Dann ist die Rekonstruktion nicht mit einer modulierten Wellenfront gleichzeitig für beide Augen eines Betrachters sichtbar. Die Augen eines Betrachters können dann im Zeit- oder Raummultiplex von verschieden Videohologrammen bedient werden, die sich in der Parallaxe unterscheiden.

Als Lichtmodulationsmittel eignen sich beispielsweise hochauflösende flache Lichtmodulatoren mit Bildauflauflösungen von mehreren Millionen Pixeln gut, die in Displays für Video- und TV-Geräten oder Projektoren eingesetzte werden. Diese erreichen umso größere Lichtbeugungswinkel je kleiner ihr Abstand der Mittelpunkte der Modulatorzellen, der so genannte Modulator-Pitch, ausgeführt ist.

Aus der internationalen Veröffentlichung WO 2004/044659 mit der Bezeichnung "Videohologramm und Einrichtung zur Rekonstruktion von Videohologrammen" ist ein Rekonstruktionssystem bekannt, welches zur räumlichen Lichtmodulation ein aus der Fernseh- und Videotechnik bekanntes Flüssigkristall-Display LCD mit konventioneller Auflösung verwendet. Dieses Rekonstruktionssystem enthält Fokussiermittel zwischen den Beleuchtungsmitteln und den Lichtmodulationsmitteln. Diese ermöglichen mit einer für Videohologramme relativ geringen Modulatorauflösung eines konventionellen Flüssigkristall-Displays in einem Rekonstruktionsraum zwischen dem räumlichen Lichtmodulator und einem Sichtbarkeitsbereich an einer Augenposition eine holographisch rekonstruierte Szene in einem weiten Blickwinkel und mit hoher Raumtiefe bei guter Auflösung für wenigsten einen Betrachter sichtbar zu machen.

Ein Nachteil derartiger Lichtmodulatoren ist, dass diese trotz des relativ kleinen Pitch der Modulatorzellen immer noch einen sehr kleinen Beugungswinkel aufweisen, so dass ein Betrachten einer Rekonstruktion mit beiden Augen nicht möglich ist.

Das Rekonstruktionssystem gemäß der Veröffentlichung WO 2004/044659 offenbart deshalb zusätzlich eine Möglichkeit zum Ausrichten und zum Nachführen der Position von mehreren Sichtbarkeitsbereichen. Insbesondere realisiert das Rekonstruktionssystem einen mechanischen oder elektronischen Versatz der Lichtquellen lateral zur optischen Systemachse, durch bewegliche Spiegel oder durch mehrere verschieden positionierbare Lichtquellen, um die Lichtquellenbilder, welche die Sichtbarkeitsbereiche zum Wahrnehmen der Rekonstruktion bilden, zu verschieben.

Nachteilig ist, dass sich bei einem großen Nachführbereich erhebliche Aberrationen, welche die Fokussiermittel beim Lichtdurchgang bewirken, störend auf die Rekonstruktion der räumlichen Szene auswirken.

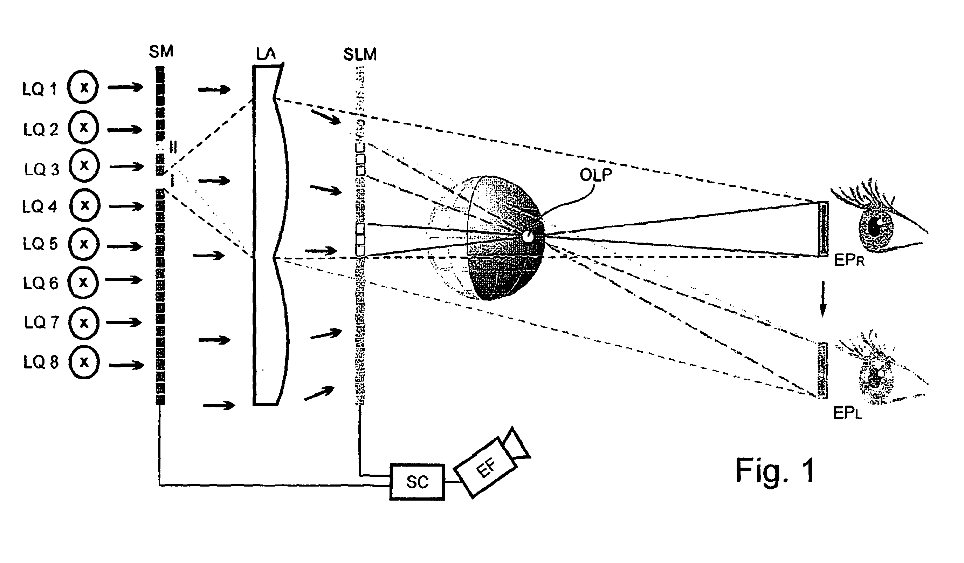

In der internationalen Veröffentlichung WO 2006/119920 mit der Bezeichnung: "Device for holographic reconstruction of three-dimensional scenes" offenbart der Anmelder ebenfalls ein holographisches Rekonstruktionssystem, weiches zum Betrachten der Rekonstruktion wenigstens einen gegenüber der Modulatorfläche des Lichtmodulators geringen Sichtbarkeitsbereich an einer Augenposition nutzt. FIG.1 zeigt das Funktionsprinzip des bekannten Systems.

Ein Feld von interferenzfähigen Lichtquellen LQ 1 ... LQ8, die als Matrix angeordnet sind und eine als flächenförmige Hintergrund-Beleuchtung bilden, beleuchtet die Modulatorfläche eines räumlichen Lichtmodulators SLM und ein Fokussiermittelfeld LA enthält eine Vielzahl von Abbildungselementen, wie Sammellinsen, welche mechanisch miteinander verbunden sind. Jedem Abbildungselement des Fokussiermittelfeldes LA sind mehrere Lichtquellen, die interferenzfähiges Licht emittieren, zugeordnet, so dass ein Bündel von Beleuchtungseinheiten entsteht, die alle gemeinsam die Modulatorfläche beleuchten, wobei jede Beleuchtungseinheit nur einen Teilbereich der Modulatorfläche durchdringt. Die interferenzfähigen Lichtquellen in den Beleuchtungseinheiten sind mit Hilfe einer schaltbaren Modulatormatrix SM so aktiviert, dass die Abbildungselemente des Fokussiermittelfeldes ihre zugeordnete Lichtquelle an einer Augenposition abbilden. Damit sendet jede Beleuchtungseinheit eine Teillichtwelle durch einen Teilbereich der Modulatorfläche und nach separater Modulation durch die verschiedenen Teilbereiche überlagern sich die Teillichtwellen zu einem gemeinsamen Sichtbarkeitsbereich an einer Augenposition EP_{R}.

Ein Ausrichten und Nachführen der Position des Sichtbarkeitsbereichs auf wechselnde Augenpositionen realisiert die zusätzliche, schaltbare Modulatormatrix SM mit lichtdurchlässig schaltbaren Modulatorzellen, beispielsweise ein so genanntes LCD-Shutter Array. Eine Systemsteuerung SC öffnet abhängig von der aktuellen Augenposition EP_{R} oder EP_{L}, die ein Augenfinder EF ermittelt, für jedes Abbildungselement des Fokussiermittelfeldes einen punktförmigen Lichtaustritt I oder II für das interferenzfähige Licht, welches die Abbildungselemente zur Augenposition fokussieren. Dabei entsteht ein Muster von lichtdurchlässig geschalteten Modulatorzellen. Bei lateralen Änderungen der aktuellen Augenposition wird die Position des Sichtbarkeitsbereiches angepasst, in dem die Systemsteuerung SC das Muster der lichtdurchlässig geschalteten Modulatorzellen entsprechend lateral verschiebt. Bei axialen Änderungen der Augenposition verändert die Systemsteuerung SC die Abstände der lichtdurchlässig geschalteten Modulatorzellen im Muster. Die genannte Veröffentlichung offenbart auch die Verwendung eines schaltbaren Lichtquellenfeldes mit diskret aktivierbaren Punktlichtquellen, um das beschriebene Ausrichten und Nachführen des Lichtwellenfeldes zu realisieren.

Es hat sich jedoch gezeigt, dass das Ausrichten und Nachführen der Position des Sichtbarkeitsbereichs durch Anpassen der Ausbreitung des Lichtwellenfeldes nach der beschriebenen Lösung verschiedene Nachteile wie Abberationen und hohe Lichtverluste aufweist.

Der Anmelder beschreibt in der internationalen Veröffentlichung WO2006/119760 mit dem Titel: "Projektionsvorrichtung und Verfahren zur holographischen Rekonstruktion von Szenen" ein holographisches Projektionssystem, das für den Lichtmodulator ein Mikro-Display mit einer Diagonalen von wenigen Zentimetern Größe nutzt. Die Vorrichtung weist Abbildungsmittel auf, die das interferenzfähige Licht in einer Fokalebene abbilden, so dass ein Sichtbarkeitsbereich für eine Augenposition entsteht. Ein erstes Abbildungsmittel bildet ein auf dem Lichtmodulator kodiertes Videohologramm vergrößert auf einem fokussierenden Wiedergabeschirm ab. Der Wiedergabeschirm bildet ein Raumfrequenzspektrum des Videohologramms an einer Augenposition ab. Damit ist eine optisch vergrößerte Rekonstruktion der Szene mit einem Blick vom Sichtbarkeitsbereich zum Wiedergabeschirm in einem weiten Sichtwinkel sichtbar. Der Sichtbarkeitsbereich ist daher die Abbildung der verwendeten Beugungsordnung der Fourier-Ebene des Videohologramms. Wie auch bei den zuvor beschriebenen Rekonstruktionssystemen, kann der Lichtmodulator derart kodiert werden, dass sich der Rekonstruktionsraum rückwärtig hinter dem zweiten Abbildungsmittel fortsetzt.

Das in der Veröffentlichung WO2006/119760 beschriebene Projektionssystem enthält außerdem gemäß einer besonderen Ausführung zum Ausrichten und zum Nachführen der Position des Sichtbarkeitsbereichs steuerbare Ablenkmittel, die ein mechanisches, elektrisches oder optisches Ausrichten und Nachführen realisieren. Die Ablenkmittel liegen entweder in der Nähe des ersten Abbildungsmittels und verschieben wie ein Prisma das räumliche Spektrum virtuell oder liegen in der Nähe des Wiedergabeschirms und realisieren eine Prismenfunktion und optional eine Linsenfunktion, um den Sichtbarkeitsbereich lateral und optional axial nachzuführen.

Alle oben beschriebene Rekonstruktionssysteme nutzen Lichtmodulationsmittel mit einer diskreten Modulatorzellenstruktur und mit einer für die Holographie vergleichsweise geringen Auflösung. Die diskrete Modulatorzellenstruktur führt einerseits bekanntlich dazu, dass sich die holographische Rekonstruktion in anderen Beugungsordnungen eines Beugungsintervalls periodisch wiederholt, so dass Sichtstörungen auftreten können. Andererseits führt der erwähnte verfügbare Pitch der Modulatorzellenstruktur zu einem vergleichsweise geringen Beugungswinkel, so dass in der Praxis für einen störungsfreien Sichtbarkeitsbereich eine Beugungsordnung von einigen Millimetern bis zu wenigen Zentimetern zur Verfügung steht. Deshalb ist es sinnvoll, eine derartige Vorrichtung mit einem Positionserkennungs- und Nachführmodul zu kombinieren. Dieses richtet mit Wellennachführmitteln die modulierten Lichtwellen auf die aktuelle Augenposition, stellt die Position des Sichtbarkeitsbereichs abhängig von der Augenposition ein und führt sie beim jedem Wechsel der Augenposition nach.

Als ein Beispiel offenbart das in der Veröffentlichung WO 2004/044659 beschriebene Rekonstruktionssystem ein Verschieben von Lichtquellen zum Ausrichten und zum Nachführen der Position des Sichtbarkeitsbereichs. Insbesondere verschiebt das System aktive Lichtquellen in einem Lichtquellenfeld mechanisch oder elektronisch lateral zur optischen Achse des Systems.

Von Nachteil ist bei allen vorgenannten Nachführsystemen, dass Aberrationen der Abbildungsmittel sich bei einem großen Nachführbereich störend auf die Rekonstruktion der räumlichen Szene auswirken. Die Aberrationen entstehen dadurch, dass je nach Augenposition das Licht das Abbildungsmittel zum Rekonstruieren unter verschiedenen Winkeln durchläuft.

Außerdem wird entweder ein mechanisches Positionieren der Lichtquellen oder im Fall eines elektronisches Steuern der Lichtquellenposition eine hohe räumliche Auflösung des Lichtquellenfeldes benötigt. Dann muss das Lichtquellenfeld für jedes Abbildungselement des Abbildungsfeldes eine Vielzahl von Punktlichtquellen enthalten.

Aus der internationalen Veröffentlichung WO 2004/099847 mit dem Titel: "Electrowetting Cell" ist eine steuerbare elektrooptische Zelle, eine sogenannte ElektroBenetzungszelle bekannt. Diese Zellen nutzen den Kapillareffekt und eine Elektrobenetzung, um mit elektrostatischem Potential die Oberflächenspannung von Flüssigkeiten zu verändern und damit das optische Brechungsverhalten steuern. Eine Elektrobenetzungszelle enthält im Prinzip eine Kapazität, die zwischen den Elektroden mit einer hydrophoben Flüssigkeit, wie Öl und Wasser gefüllt ist, wobei eine der Elektroden hydrophob beschichtet ist. Ohne elektrisches Feld legt sich das Öl als Film über die beschichtete Elektrode, mit elektrischem Feld verdrängt das Wasser den Ölfilm, da das anliegende Feld die Polarisation der Dipole in der Wasseroberfläche aufhebt. Die Zelle kann elektronisch einstellbare optische Linsen und Prismenelemente von Größenordnungen unterhalb eines Quadratmillimeters realisieren.

Ein autostereoskopisches Bildwiedergabegerät gemäß der internationalen Veröffentlichung WO 2004/075526 mit dem Titel "Auto stereoscopic Display" sendet Bildlichtpunkte ohne Nachführeinrichtung horizontal in eine Vielzahl von Richtungen. Das Bildwiedergabegerät weist eine Hintergrundbeleuchtung auf, welche kollimiertes Licht über die Bildlichtpunkte eines Bildanzeigegerätes in Richtung eines Feldes mit optischen Ablenkelementen mit dynamisch einstellbaren Ablenkverhalten emittiert. Die optischen Elemente sind insbesondere Elektro-Benetzungszellen, welche als einstellbare Linsen oder Mikroprismen betrieben werden und eine dynamisch einstellbare Strahlsteuerung realisieren. Um ein Nachführen der Bilddarstellung auf die aktuellen Augenpositionen von Betrachtern zu vermeiden, verändert eine Systemsteuerung mit dem einstellbaren Feld von optischen Ablenkelementen während jeder Videobildperiode sowohl vielfach den Austrittswinkel des Lichtes, als auch auf für das Bildanzeigegerät vielfach den Bildinhalt. Dabei werden innerhalb jeder Videobildperiode bis zu hundert horizontal eng nebeneinander liegende Abstrahlrichtungen in Form von Bildsektoren in einer Kombination aus Raummultiplex und Zeitmultiplex bedient, so dass ohne Nachführen jedes Betrachterauge in der Parallaxe verschiedene Videobilder sieht. Die optischen Ablenkelemente schwenken dabei die vom Bildwiedergabegerät zeitlich verschieden modulierten Strahlen über die Vielzahl der dicht beieinander liegenden Bildsektoren. Die Veröffentlichung offenbart keine technischen Mittel, wie die Systemsteuerung mit dem Feld der optischen Ablenkelemente ein interferenzfähiges moduliertes Wellenfeld umlenken kann.

Im Gegensatz zum Gegenstand der vorliegenden Erfindung betrifft die internationale Veröffentlichung WO 2004/075526 ein autostereoskopisches Bildwiedergabegerät das keine Objektlichtpunkte in einem Betrachterraum als drei-dimensionale Anordnung holographisch rekonstruiert. An Stelle der rekonstruierten Objektlichtpunkte zeigt ein autostereoskopisches Bildwiedergabegerät in der Modulatorebene zweidimensionale Bilder in der Form von leuchtenden Bildpunkten an, welche für beide Betrachteraugen verschiedene Bildinformation tragen. Das Dokument enthält keine Hinweise darauf, dass weder Lichtbeugung noch Lichtinterferenz bei der Bildwiedergabe irgend eine nutzbare Funktion haben. Die dynamisch einstellbare Strahlsteuerung ist für ein einfaches Ablenken von Strahlenbündeln mit in-kohärentem Licht konzipiert und stellt keinerlei Anforderungen an die Interferenzbedingungen der abgelenkten Lichtstrahlen untereinander. Insbesondere das Eindringen von Licht parasitärer Beugungsordnungen können die nahe beieinander liegenden Strahlenbündel nicht vermeiden. Außerdem würde unlineares Transmissionsverhalten in den Randzonen der Benetzungszellen die Ausbreitung der interferenzfähigen modulierten Lichtwellen beeinflussen und das Interferenzverhalten des Rekonstruktionssystems und damit der Güte der Rekonstruktion empfindlich stören.

Die Veröffentlichung offenbart keine technischen Mittel, wie die Systemsteuerung mit dem Feld der optischen Ablenkelemente ein interferenzfähiges moduliertes Wellenfeld umlenken kann und der Einfluss von parasitären Beugungsordnungen zu verhindern ist.

### Beschreibung der Erfindung:

Die Aufgabe der vorliegenden Erfindung besteht darin, ein holographisches Rekonstruktionssystem mit einer opto-elektronischen Wellennachführung zu schaffen, bei der die modulierten Lichtwellen unabhängig von der aktuellen Augenposition eines Betrachter in einem Nachführbereich einen weitestgehend konstanten Lichtweg durch das Rekonstruktionssystem aufweisen, so dass die Anforderungen an die optischen Komponenten des Systems minimiert werden und ein großer Teil des optischen Lichtweges des Rekonstruktionssystems vor dem Rekonstruieren der Szene unter statischen Bedingungen in eine Korrektur der optischen Wellenausbreitung einbezogen werden kann. Außerdem sollen möglichst keine Lichtverluste beim Ausrichten auftreten und das optische Übertragungsverhalten der optischen Komponenten der Wellennachführung soll an die strengen Bedingungen der Interferenzfähigkeit anpassbar sein, so dass die Objektlichtpunkte einer dreidimensionalen Szene frei von Fehlern in der lokalen Position innerhalb der Struktur der Szene und mit möglichst originalgetreuen Lichtwerten rekonstruiert werden. Eine präzise Zuordnung der Wellennachführmittel zur Struktur der Modulatorzellen der Lichtmodulationsmittel soll vermieden werden.

Erfindungsgemäß wird diese Aufgabe durch ein holographisches Rekonstruktionssystem nach Anspruch 1 gelöst. Weitere Ausfürungsformen sind in der abhängigen Ansprüchen definiert.

Die Erfindung geht von einem holographischen Rekonstruktionssystem zum dreidimensionalen Rekonstruieren von Objektlichtpunkten einer Szene aus, das räumliche Lichtmodulationsmittel enthält, welche interferenzfähige Lichtwellen von Beleuchtungsmitteln mit wenigstens einem Videohologramm modulieren.

Optische Fokussiermitteln fokussieren die modulierten Lichtwellen mit den rekonstruierten Objektlichtpunkten für mindestens eine Augenposition von Betrachteraugen und eine Systemsteuerung richtet über elektro-optische Ablenkmittel, die fokussierten, modulierten Lichtwellen mit auf mindestens eine Augenposition aus und führen sie bei Positionswechsel der Augenposition nach. Die Lichtmodulationsmittel modulieren die Lichtwellen so, dass diese unabhängig vom Ausrichten und Nachführen der Lichtwelle die Objektlichtpunkte vor der Augenposition rekonstruieren.

Gemäß der Erfindung enthalten die elektro-optischen Ablenkmittel wenigsten ein Ablenkmittelfeld mit einstellbaren Mikrozellen, das eine Vielzahl der an sich bekannten regulär strukturierten Elektro-Benetzungszellen mit diskret einstellbarer Lichtablenkung aufweist.

Wenn die regulär strukturierten Elektro-Benetzungszellen in den Ablenkmittelfeldern Zellabstände von nur wenigen Mikrometern aufweisen, wirkt ein Mikrozellenfeld unter einer kohärenten Beleuchtung wie ein steuerbares Beugungsgitter mit veränderlicher Oberflächen-Relief-Struktur. Dieses Beugungsgitter kann von einer Systemsteuerung entweder als Amplituden-Gitterstruktur oder vorteilhaft als Phasen-Gitterstruktur eingestellt werden, welche das kohärente Licht in einem periodischen Beugungsspektrum mit einer Vielzahl von Beugungsordnungen beugt.

Ein einstellbares Phasengitter weist unter den optischen Beugungsgittern den Vorteil auf, dass diese anstelle der Lichtamplitude die Lichtphase beeinflussen. In einem idealen Phasengitter nimmt somit die Intensität nicht ab. Im Idealfall tritt kein Lichtverlust auf.

Das Beugen von kohärentem Licht in einem periodischen Beugungsspektrum mit einer Vielzahl von Beugungsordnungen hat zur Folge, dass ein Einstellen des Ablenkwinkels für das ausgehende Wellenfeld eines solchen elektro-optisches Ablenkmittels nicht kontinuierlich erfolgen kann. Bei der Variation des Prismenwinkels der einstellbaren Mikrozelle durch ein elektrisches Steuerfeld ändern sich die Beugungswirkungsgrade in den einzelnen Beugungsordnungen der ausgehenden Lichtwellen. D.h. die Aufteilung der Intensität erfolgt in Bezug auf Winkel, die durch die Gittergleichung festgelegt sind. Eine Variation des Prismenwinkels, das heißt, der oberflächenneigung des Prismas in der einstellbaren Mikrozelle der durch das steuernde elektrische Feld entspricht einer Variation der Beugungswirkungsgrade in den verschiedenen Beugungsordnungen, d.h. die Ausbreitung der Lichtwellen erfolgt nur in diskreten Richtungen, wobei die Intensitäten in diesen Richtungen variiert werden können.

Trotz des diskreten Schaltens von Winkeln in einer solchen Gitterstruktur der einstellbaren Mikrozellen kann für ein Rekonstruktionssystem gemäß der Erfindung auch zum kontinuierlichen Einstellen des Ablenkwinkels für das ausgehende interferenzfähige Wellenfeld genutzt werden. Dafür stellt die Systemsteuerung durch ein Steuerfeld einen solchen Prismenwinkel ein, dass die Gitterbeugungsordnung mit dem größten Beugungswirkungsgrad am nächsten zur Zielrichtung der aktuellen Augenposition liegt und variiert den Einfallswinkel der kohärenten Beleuchtung des Ablenkmittelfeldes so, dass diese Gitterbeugungsordnung den Abweichungsfehler von der Zielrichtung überwindet und die ausgehende interferenzfähige Wellenfeld zur gewünschten Augenposition führt.

Eine Alternative für ein kontinuierliches Nachführen besteht darin, dass mit diskreten Phasenschiebemitteln im Lichtweg das Phasenübertragungsverhalten von benachbarten Mikrozellen kontinuierlich geändert wird, und benachbarte einstellbare Mikrozellen zu einer Verbundzelle zusammengefasst werden, um die Gitterabstände der Mikrozellen zu erhöhen. Mit geänderten Gitterabständen können geänderte Ablenkwinkel realisiert werden.

Ein Nachteil von Elektrobenetzungszellen ist, dass diese mit höherem Ablenkwinkel ihre Transmission reduzieren, da ein höherer Anteil von Streulicht auftritt. Bei schrägem Einfall auf optische Medien mit unterschiedlichem Brechungsindex transmittieren diese nur ein Teil der Lichts. Ist der Einfallswinkel größer, als der Winkel der Totalreflexion, so wird kein Licht transmittiert.

In den Mikrozellen entsteht mit zunehmender Größe des Prismenwinkels Streulicht, welches die Funktion durch Mehrfachreflexion stört und die holographische Rekonstruktion negativ beeinflusst.

Gemäß der Erfindung sind die Seitenwände der Mikrozellen so ausgeführt, dass diese als Lichtfalle reflektiertes Streulicht absorbieren.

In einer speziellen Ausführung der Erfindung sind die Seitenwände der variablen Mikrozellen hydrophobisch und elektrisch isolierend. Die hydrophobische Schicht stellt mit ihrer Oberflächenrauheit die notwendigen Benetzungseigenschaften bereit. Das Material, welches zur Beschichtung der Seitenwände verwendet wird, kann in vorteilhafter Art und Weise absorbierend ausgeführt werden. Ein anderes Merkmal zum Realisieren von Absorption ist, die Beschichtung der Seitenwände mit einer hydrophobischen Schicht, die nur sehr dünn ist, d.h. beispielsweise nur einen Bruchteil der Wellenlänge der Beleuchtung, auszuführen. Dieses ermöglicht es, zwischen Elektrode und hydrophobischer Ebene ein absorbierendes Material anzubringen, welches an sich beispielsweise nicht die notwendigen Benetzungseigenschaften hat. Letztere Ausführung hat auch den Vorteil, beispielsweise durch einen porösen Kunststoff bedingte mangelnde elektrische Isolation zu vermeiden.

Ein weiterer Nachteil von Elektrobenetzungszellen ist, dass diese in ihrer Funktion eine nicht zu vernachlassigende Abhängigkeit von der Temperatur aufweisen.

Der Brechungsindex von optischen Materialien ist von der Temperatur abhängig, d.h. n = n(T). Öl weist beispielsweise eine Änderung des Brechungsindex auf, die berücksichtigt und kompensiert werden muss.

Eine Änderung der Temperatur der Mikrozellen bedingt eine Änderung des Brechungsindizes n der Materialien, mit denen die Mikrozellen gefüllt sind. Dies bewirkt eine Änderung des optischen Weges des Lichtes durch die Zellen. D.h., dass Änderungen der Temperatur der Mikrozellen das Phasenverhalten und den Ausbreitungswinkel des Lichtes ändern. Eine Änderung des Brechungsindizes entspricht einer Änderung des Verlaufes der Phasenfunktion, die über den Querschnitt der jeweiligen Zellen des Gitters realisiert wird.

Wird das Ablenkmittelfeld derart eingestellt, dass die Maximierung des Beugungswirkungsgrades für die Beugungsordnung erreicht wird, die den gewünschten Winkel der Nachführung realisiert, so bedingt beispielsweise eine Änderung der Temperatur um einige Grad eine Änderung der Beugungswirkungsgrade der einzelnen Beugungsordnungen derart, dass andere Beugungsordnungen, die nicht in Richtung der gewünschten Nachführung liegen eine erhöhte Intensität aufweisen, was zur Störung der idealen Hologrammrekonstruktion führt.

Um diesen Mangel zu kompensieren besitzt das Rekonstruktioinssystem gemäß der Erfindung technische Mittel:
- um Änderungen der Temperatur, bzw. daraus resultierende Änderungen der Phase, d.h. der optischen Wegstrecke modulo 2π, zu erfassen und zu korrigieren,
- zum Messen der Temperatur T und/oder der Temperaturverteilung T(x, y), um mittels Korrekturtabellen, d.h. beispielsweise mittels eines bekannten Verlaufes der Funktion n(T) eine Kompensation der Änderung der Brechungsindizes der in den Zellenfeldern verwendeten Materialien zu erreichen,
- zum Messen der Temperatur und/oder der Temperaturverteilung mit Hilfe von Temperatursensoren, welche sich in der Ebene des Ablenkmittelfeldes befinden, mittels optisch abtastender, oder optisch abbildender IR-Sensoren, um die für den jeweiligen Aufbau hinreichende Messgenauigkeit der Funktion T(x,y) realisieren zu können.

Im Panel integrierte Sensoren lassen sich beispielsweise leicht in Form von Widerständen realisieren, die im betrachteten Temperaturbereich einen ausreichend hohen Gradienten der Funktion R(T) realisieren.

Neben der Messung der Temperatur oder Temperaturverteilung kann es auch vorteilhaft sein, die durch die Änderung der Temperatur bedingte Änderung des optischen Weges, d.h. die Änderung der Phase ϕ = ϕ (T), zu messen und anhand dieser Messwerte eine Korrektur der einzustellenden Prismenwinkel vorzunehmen.

Vorteilhaft kann beispielsweise auch eine Wellenfront mittels eines Wellenfrontsensors gemessen werden und somit der Kontrolle der Rekonstruktionstreue dienen. Die Wellenfront kann seitlich aus dem Strahlengang geführt werden, so dass eine Messung/Kontrolle im Betrieb möglich ist.

Neben der Messung von Temperatur oder Temperaturverteilung kann auch vorteilhaft die durch die Änderung der Temperatur bedingte Änderung des optischen Weges, d.h. die Änderung der Phase über die Änderung einer Intensitätsverteilung I = I(ϕ (T)) gemessen werden. D.h., dass geeignet gewählte Intensitätsverteilungen, die von einer Kamera erfasst werden, der aktiven Kontrolle der Funktionsweise der Rekonstruktion dienen.

Eine Intensitätsverteilung, die der Kontrolle der Rekonstruktionstreue dient, kann beispielsweise auch durch ein Gitter mit sehr geringem Beugungswirkungsgrad seitlich aus einer Ebene hinter dem SLM ausgekoppelt werden. In einem Projektionsaufbau kann eine seitliche Auskopplung beispielsweise mittels einer Planplatte erfolgen.

Die Korrektur kann aus einer Iteration bestehen. Mehrdeutigkeiten des Gleichungssystems können durch einen Satz zusätzlich eingeführter Variablen, d.h. beispielsweise mit ϕᵢ(x, y,) und/oder Iᵢ(x, y,) beseitigt werden.

Eine direkte und einfache Möglichkeit der Messung der relativen Phase, die zwischen einzelnen Mikrozellen und den Modulatorzellen vorliegt, ist in einem System, welches mit kohärenter Strahlung beleuchtet wird, einfach umzusetzen, indem die Interferenz einer oder mehrerer Kugelwellen ausgewertet wird, die von den betrachteten Punkten ausgehen.

Kugelwellen, die von benachbarten Punkten ausgehen und sich kohärent überlagern erzeugen dabei im gemeinsamen Überlappungsbereich ein Interferenzmuster. Das beispielsweise vorliegende Streifenmuster kann direkt ausgewertet werden, indem die Lage der Streifen bestimmt wird, d.h. der relative Gangunterschied. Dies kann einfach mittels Schwellwertbildung und Kantenfindung erfolgen. Die Ermittlung der Streifenlage kann auch mittels Fourier Transformation (Trägerfrequenzverfahren) erfolgen. Die zusätzliche Einführung von beispielsweise 5 Phasen ϕᵢ(x, y) mit i = 1... 5, d.h. die Anwendung Phasen schiebender Interferometrie erlaubt dabei Messunsicherheiten < 2π/200, d.h. Messunsicherheiten in der Wegdifferenz < λ/200.

Die Bestimmung der relativen Phase zwischen mehreren Punkten kann zwischen den Bildsequenzen der Rekonstruktion erfolgen, d.h. beispielsweise dadurch, dass alle Punkte bis auf die zu messenden Punkte auf 0 gesetzt werden. Eine Kamera kann synchron die entstehende Intensitätsverteilung aufzeichnen. Bei einer die Phase schiebenden Interferometrie können auch Bildsequenzen zwischen den eingeführten Phasenverschiebungen liegen.

Innerhalb kurzer Zeit können beispielsweise genügend Punkte in ihrer relativen Phasenlage gemessen werden, so dass eine Phasen-Korrektur, die beispielsweise durch eine Temperaturänderung notwendig wird, erfolgen kann. Durch Integration der relativen Phasenlagen über die Fläche erhält man die Phasenverteilung der gesamten betrachteten Ebene, d.h. bis auf einen konstanten Anteil, der allgemein zu vernachlässigen ist. Ein holographisches Display, welches über Mittel der Auskopplung von Teilwellen verfügt, stellt somit selbst ein Interferometer dar, mit dem Änderungen der Wellenfront ermittelt werden können.

Die Art und Weise der Messung der Phasenverteilung ist allgemein für Systeme von Vorteil, mit phaseschiebenden Zellenelementen, beispielsweise zur Bilderzeugung.

Ein weiteres Problem von Mikrozellen ist die Abhängigkeit ihrer Funktion von der anliegenden elektrischen Spannung.

Der Kontaktwinkel und damit der Prismenwinkel hängen von der angelegten Spannung, bzw. von der Spannungsdifferenz ab. Abschätzungen zeigen, dass eine Ansteuerung des Winkelbereiches der Flüssigzellen mit zumindest 10 Bit, d.h. mit 2¹⁰ = 1024 Werten erfolgen sollte. Der Einfluss äußerer elektrischer Störfelder muss daher minimal gehalten werden. Diese wird gemäß einem weiteren Merkmal der Erfindung dadurch erreicht, das die Mikrozellen elektrostatisch geschirmt werden. Dies ist auf der Ober- und Unterseite des Panels vorteilhaft mittels einer Beschichtung zu erreichen, die geeignet ist, Ladungen abzuführen und hinreichend transparent ist. Dies kann beispielsweise eine fotolithografische Beschichtung sein. Benachbarte Elektroden, die der Ansteuerung der Mikrozellen dienen, müssen gegeneinander isoliert sein, wobei sich zwischen ihnen eine Elektrode befindet, die der Abschirmung dient, d.h. beispielsweise auf V = 0 gesetzt ist.

Insbesondere sind Mikrozellen für eine zweidimensionale Ablenkung von anliegenden Spannungsdifferenzen abhängig. Da die Prismenkeilwinkel von den Spannungsdifferenzen abhängen, überlagern sich bei Mikrozellen, welche eine 2D-Ablenkung realisieren, im Bereich der Kanten der Zellen durch Überlagerung Felder, welche durch die Steuerelektroden erzeugt werden.

Eine Reduzierung des Übersprechens bei einer 2D-Ablenkung wird dadurch erreicht, dass zwischen den Steuerelektroden zusätzliche Elektroden angebracht sind, die ein festes Potential, d.h. beispielsweise V = 0 realisieren.

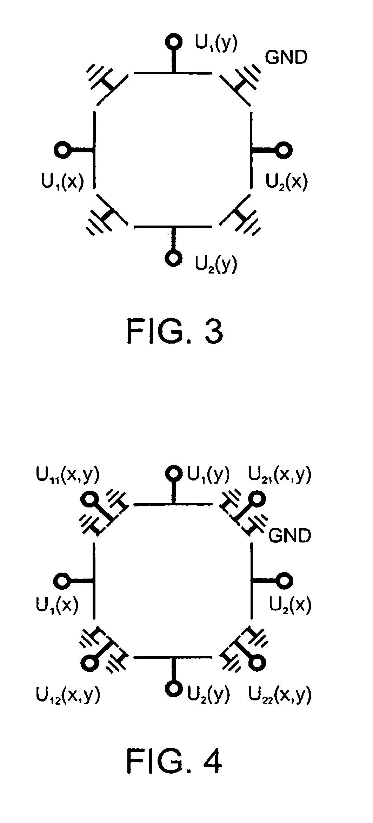

Bei Materialien, die eine hohe Oberflächenenergie aufweisen, ergibt die Einführung von direkt, oder indirekt steuerbaren Elektroden (Abbildung 4: Uᵢⱼ (x, y)) zwischen den Elektroden, welche der 2D-Ablenkung dienen, die Möglichkeit, eine bis in den Randbereich der Zellen ebenere Grenzfläche zu realisieren. In den Ecken können gezielt Kontaktwinkel eingestellt werden, die ein gezieltes Gegensteuern von am Rand auftretenden Krümmungen ermöglichen.

Flüssigzellen können herstellungsbedingt nicht zu vernachlässigende Phasenschwankungen aufweisen.

Das Befüllen von Feldern mit Elektrobenetzungszellen mit flüssigen Komponenten ist in Bezug auf schwankende Füllmengen deutlich anfälliger, als dies beispielsweise bei Phasenmodulatoren der Fall ist, die nur ein Flüssigkristall aufweisen. Eine Schwankung der Phase, ein Phasen-offset zwischen einzelnen Zellen beeinflusst die Rekonstruktion des Objektes negativ. Eine ungleichmäßige Befüllung der einzelnen Mikrozellen mit zwei optischen Medien führt zu ungleichmäßigen optischen Wegen des Lichtes durch die Zellen. D.h., dass Schwankungen im Befüllungsvolumen der einzelnen Komponenten der Mikrozellen Schwankungen in der Phase des durch die Zellen propagierenden Lichtes entsprechen. Ein Ablenkfeld von ungleichmäßig befüllten Zellen realisiert ungleiche Phasenhübe.

Das Rekonstruktionssystem enthält deshalb technische Mittel, um Schwankungen in der durch einzelne Zellen realisierten Phase, d.h. optischen Wegstrecke modulo 2π, zu erfassen und diese bei der Kodierung der Hologramme zu berücksichtigen.

Zum Kompensieren von Phasenfehler werden phasen-schiebende Elemente zusätzlich in den Lichtweg gelegt, die einen zusätzlichen Phasenhub realisieren, derart, dass ein Ausgleich der optischen Weglängen erfolgt.

Elektrobenetzungszellen können bei hohen Schaltfrequenzen Eigenresonanzen und allgemein Schwingungen der Grenzschicht aufweisen. Das heißt, bei hohen Schaltfrequenzen können Schwingungen der Grenzfläche mit erhöhter Amplitude auftreten und die Zellen einen Phasenkeil beispielsweise nur im zeitlichen Mittel realisieren.

Eine Schwingungsdämpfung kann durch geeignete Form des Ansteuerpulses U(t), bzw. U₁(t) und U₂(t) erreicht werden. In vorteilhafter Weise wird der Pulsverlauf nicht in Form einer Stufenfunktion gewählt, sondern derart, dass er zu einer maximalen Unterdrückung einer Resonanz führt. Die optimalen Pulsformen sind Materialabhängig und können mit Hilfe eines Modells, oder experimentell ermittelt werden. I(t) kann auch geeignet gewählt, bzw. begrenzt werden.

Die Temperaturabhängigkeit kann in einer Korrekturtabelle abgelegt sein und in Abhängigkeit von der Temperatur zur Korrektur der Pulsformen herangezogen werden.

Elektrobenetzungszellen zeigen Alterungseffekte, zu denen chemische Reaktionen beitragen.

Hydrophobische Kunststoffe sind bei den betrachteten Schichtdicken < 500 nm leicht porös. Teflon quillt beispielsweise im Kontakt mit Öl auf. Dies entspricht einer reduzierten elektrischen Isolierung und erhöht in Abhängigkeit von der Schaltfrequenz die Verlustleistung, d.h. trägt zur Wärmeentwicklung in der Ebene der Flüssigzellen bei.

Aus Kosten- und Prozessgründen ist die Verwendung von Metallelektroden, beispielsweise aus Kupfer von Vorteil. Ein Kontakt zu Wasser und/oder Öl bewirkt dabei jedoch Korrosion. Zusätzlich eindiffundierte Ionen, d.h. beispielsweise MetallIonen verändern die chemischen Potentiale und damit die Funktion der Elektrobenetzungszellen deutlich.

Das Aufbringen einer elektrisch isolierenden Schicht auf der Elektrode, die eine Diffusionsstoppschicht darstellt, reduziert die Verlustleistung und vermeidet Oxidationsprozesse, die zwischen den Elektroden und den Flüssigkeiten der Elektrobenetzungszellen auftreten.

Der Nachteil poröser hydrophobischer Kunststoffbeschichtungen kann beseitigt werden, indem diese Kunststoffe vermieden werden. Hydrophobische Oberflächeneigenschaften können beispielsweise in Plasma-Prozessen erzeugt werden. So kann auch auf Siliziumoxid mittels eines modifizierten Ätzprozesses eine hydrophobische Oberfläche erzeugt werden, welche nicht die Nachteile von Kunststoffbeschichtungen aufweist.
- FIG. 1: zeigt ein holographisches Rekonstruktionssystem, das aus der internatio- nalen Veröffentlichung WO 2006/119920 bekannt ist und das interferenz- fähige Lichtwellenfeld ohne die Mittel gemäß der Erfindung nachführt.
- FIG. 2: zeigt ein holographisches Rekonstruktionssystem entsprechend der inter- nationalen Veröffentlichung WO 2006/119920 das an Stelle einer Schalt- matrix SM ein Ablenkmittelfeld DM mit einer diffraktiven Mikrozellenstruk- tur zum Nachführen des interferenzfähigen Lichtwellenfeldes nutzt.
- FIG. 3: zeigt die Struktur einer einzelnen Mikrozelle, bei der ein Reduzieren des Übersprechens bei einer 2D-Ablenkung dadurch erreicht wird, dass zwi- schen den Steuerelektroden zusätzliche Elektroden angebracht sind, die ein festes Potential, d.h. beispielsweise V = 0 realisieren.
- FIG. 4: zeigt das Einfügen von steuerbaren Elektroden in Mikrozellen, die der Realisierung planer Grenzflächen bis in die Randbereiche der Zelle die- nen.

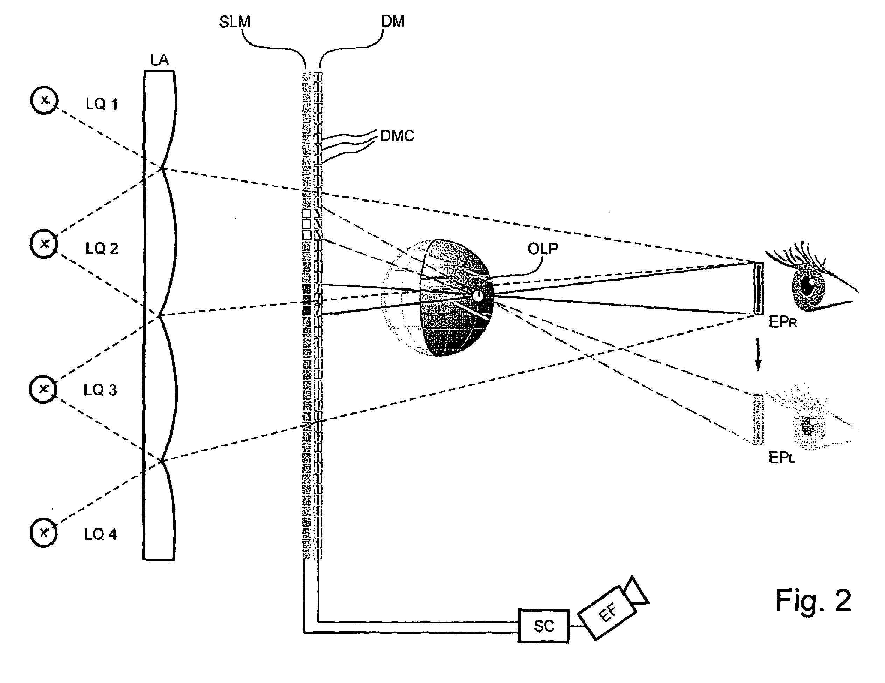

Figur 2 zeigt ein holographisches Rekonstruktionssystem zum dreidimensionalen Rekonstruieren von Objektlichtpunkten einer Szene gemäß der Erfindung. Das System enthält:
- räumliche Lichtmodulationsmittel SLM, welche interferenzfähige Lichtwellen von Beleuchtungsmitteln LQ1 bis LQ4 mit wenigstens einem Videohologramm modulieren,
- optische Fokussiermittel LA in Form eines Linsenfeldes, welche die modulierten Lichtwellen mit den rekonstruierten Objektlichtpunkten OLP (der als Einzelbeispiel gezeichnet wurde) zu mindestens einer Augenposition EP_{R} oder EP_{L} von Betrachteraugen fokussieren.
In Figur 2 wurde die zu rekonstruierende Szene nur mit einem einzigen Lichtpunkt OLP dargestellt

Eine Systemsteuerung SC steuerbare elektro-optische Ablenkmittel DM, welche die fokussierten, modulierten Lichtwellen mit den rekonstruierten Objektlichtpunkten auf mindestens eine Augenposition EPR oder EPL ausrichten und bei Positionswechsel der Augenposition nachführen.

Gemäß der Erfindung sind die steuerbaren elektro-optischen Ablenkmittel DM ein Ablenkmittelfeld mit elektronisch adressierbaren Mikrozellen DMC die vorteilhaft am optischen Ausgang des Systems, das heißt, im Lichtweg hinter dem Lichtmodulator SLM liegen.

Das Ablenkmittelfeld weist ein solches Zellenraster mit einer Periodenstruktur auf, dass die separat ansteuerbaren Mikrozellen unter der kohärenten Beleuchtung die Funktion eines steuerbaren Beugungsgitters mit veränderlicher Oberflächen-Relief Struktur ausführen. Die Systemsteuerung SC kann mit elektrischen Steuersignalen das optische Beugungsverhalten innerhalb von Beugungsordnungen in einem Beugungsspektrum der Oberflächen-Relief-Struktur ändern.
Vorteilhaft wird das Ablenkmittelfeld als Phasengitter betrieben, um die Lichtverluste beim Ausrichten des modulierten Wellenfeldes zu minimieren.

In einem Ausführungsbeispiel umfasst das Ablenkmittelfeld Elektrobenetzungszellen mit einem Hohlkörper, welcher mit einer optisch transparenten Flüssigkeit gefüllt ist.

Die Oberfläche der Flüssigkeit weist zu den Wänden des Hohlkörpers so genannte Kontaktwinkel auf. Die Kontaktwinkel der Flüssigkeit im Hohlkörper sind für gegebene, nicht zeitlich veränderliche Geometrien, Materialien und Bedingungen konstant und können mittels der Young-Gleichung angegeben werden. Durch Anlegen eines elektrischen Feldes z.B. im Dielektrikum zwischen Flüssigkeit und einer der Wände des Hohlkörpers oder zwischen zwei gegenüberliegenden Seitenwänden des Hohlkörpers erfolgt eine Veränderung der Gleichgewichtsbedingungen und die Kontaktwinkel der Flüssigkeit zu den Seitenwänden des Hohlkörpers verändern sich. Dieser so genannte Elektrobenetzungseffekt kann mittels der so genannten Lippmann-Gleichung beschrieben werden. Durch Variation eines oder mehrerer elektrischer Felder werden die Kontaktwinkel und damit die Grenzflächenform der Flüssigkeit verändert, wodurch die Ablenkung des durchgelassenen Lichtstrahls gemäß den Gesetzen der refraktiven Optik variiert wird.

Es kann sich beispielsweise um einen zylindrischen Hohlkörper mit rechteckiger Grundfläche handeln, dessen gegenüberliegende Seitenwände jeweils paarweise die Elektroden eines Kondensators darstellen. Zwischen Elektroden und elektrisch geerdeter Flüssigkeit sind elektrisch isolierende Schichten aufgebracht, die vorteilhaft hydrophile Eigenschaften aufweisen. Bei ausgeschalteten Kondensatoren stellt sich eine nahezu sphärische Grenzfläche der Flüssigkeit ein, wodurch nur lokal begrenzte Lichtstrahlen gemäß der lokalen Krümmung der Grenzfläche abgelenkt werden können.

Die Realisierung einer Prismenfunktion für ein ausgedehntes Lichtbündel erfordert einen konstanten Prismenwinkel der Elektrobenetzungszelle über dem gesamten Durchmesser des Lichtbündels. Um dies zu erreichen, werden die Kontaktwinkel an den gegenüberliegenden Elektroden unabhängig voneinander eingestellt, indem die gegenüberliegenden Elektroden mit entsprechenden Spannungen angesteuert werden. Beispielsweise können Spannungen angelegt werden, so dass gegenüberliegende Kontaktwinkel jeweils gleich 90° sind. In diesem Fall liegt keine Prismenwirkung vor, die Elektrobenetzungszelle wirkt wie eine planparallele Platte. Ebenso gibt es Spannungspaare, um gegenüberliegende Kontaktwinkel zu erzeugen, die im Betrag ungleich sind, deren Summe jedoch gleich 180° ist. In diesem Fall wirkt das Element als Prisma. Die Elektroden sind vorzugsweise paarweise schaltbar, so dass sowohl Ablenkungen in x- als auch in y-Richtung möglich sind und dadurch der Sichtbarkeitsbereich dem Betrachter zweidimensional nachführbar ist.

In einem alternativen Ausführungsbeispiel kann eine Elektrobenetzungszelle auch mehrere nicht mischbare, optisch transparente Flüssigkeiten in einem Zellkörper aufweisen. An der Grenzfläche zwischen den Flüssigkeiten liegt ein Brechungsindexunterschied vor, wodurch eine Ablenkung des durchgelassenen Lichts erfolgt. Ein Vorteil in der Verwendung mehrerer, insbesondere zweier, Flüssigkeiten liegt darin, dass auf diese Weise eine Kapselung der Liquide möglich ist. D.h., der Zellkörper ist vollständig geschlossen und völlig durch die Liquide ausgefüllt. Außerdem können bei einer Dichteanpassung der Flüssigkeiten Gravitätsprobleme vermieden werden. D.h., wenn beide Flüssigkeiten etwa die gleiche Dichte haben, verändert sich bei einem Bewegen der Elektrobenetzungszellen, Schock oder Vibrationen, die Anordnung der Flüssigkeiten in den Zellkörpern aufgrund von Gravitationskräften nicht oder nur unwesentlich. Auch kann die Grundfläche des Zellkörpers eine andere sein, z.B. auch ein Sechs- oder Achteck. Ferner ist denkbar, dass solche Flüssigzellen auch seriell angeordnet werden, also in Ausbreitungsrichtung des Lichts hintereinander angeordnet sind.

## Patentansprüche

1. Holographisches Rekonstruktionssystem zum dreidimensionalen Rekonstruieren von Objektlichtpunkten einer Szene, das enthält:
- Beleuchtungsmittel (LQ1... LQ4) zur Erzeugung interferenzfähiger Lichtwellen,
- räumliche Lichtmodulationsmittel (SLM) zur Modulation der interferenzfähigen Lichtwellen mit wenigstens einem Videohologramm,
- optische Fokussiermittel (LA) zur Fokussierung der Lichtwellen zu mindestens einer Augenposition (EP_{R}/EP_{L}) von Betrachteraugen
- steuerbare elektro-optische Ablenkmittel (DM) zur Ausrichtung der fokussierten, modulierten Lichtwellen mit den rekonstruierten Objektlichtpunkten auf mindestens eine Augenposition (EP_{R} oder EP_{L}) und zum Nachführen der Augenposition bei Positionswechsel, und
- eine Systemsteuerung (SC) zum Ansteuern der elektro-optischen Ablenkmittel (DM),
**dadurch gekennzeichnet, dass** die steuerbaren elektro-optischen Ablenkmittel (DM) ein Ablenkmittelfeld mit elektronisch adressierbaren Mikrozellen (DMC) sind, welche solch eine Periodenstruktur in einem Zellenraster aufweisen, dass die separat ansteuerbaren Mikrozellen (DMC) unter der kohärenten Beleuchtung die Funktion eines steuerbaren Beugungsgitters mit veränderlicher Oberflächen-Relief-Struktur realisieren, bei dem das optische Beugungsverhalten innerhalb von Beugungsordnungen in einem Beugungsspektrum der Oberflächen-Relief-Struktur durch die Systemsteuerung (SC) veränderbar ist.

2. Holographisches Rekonstruktionssystem nach Anspruch 1, bei dem das Ablenkmittelfeld als Phasengitter betreibbar ist, um die Lichtverluste beim Ausrichten des modulierten Wellenfeldes zu minimieren.

3. Holographisches Rekonstruktionssystem nach Anspruch 1, bei dem durch die Systemsteuerung (SC) für die elektronisch adressierbaren Mikrozellen (DMC) des Ablenkmittelfeldes solche Prismenwinkel einstellbar sind, dass im Gitterbeugungsspektrum des Ablenkmittelfeldes die Gitterbeugungsordnung mit dem größten Beugungswirkungsgrad am nächsten zur Zielrichtung der aktuellen Augenposition (EP) liegt und bei dem die Systemsteuerung (SC) den Lichteinfallswinkel der Beleuchtungsmittel (LQ1... LQ4) variiert, um den Abweichungsfehler dieser Gitterbeugungsordnung von der Zielrichtung zu minimieren, so dass das ausgehende interferenzfähige Wellenfeld zur gewünschten Augenposition führt.

4. Holographisches Rekonstruktionssystem nach Anspruch 3, mit einer Steuervorrichtung zur Bewegung der Lichtquellen (LQ1... LQ4), um den Abweichungsfehler der Gitterbeugungsordnung von der Zielrichtung zu kompensieren.

5. Holographisches Rekonstruktionssystem nach Anspruch 3, bei dem die Systemsteuerung derart ausgelegt ist, daß die Ablenkung der interferenzfähigen Lichtwellen zwischen benachbarten Beugungsordnungen im Beugungsspektrum durch Zusammenfassen von mehreren Mikrozellen zu einem einstellbaren Phasenraster variabel ist, um Ablenkwerte zwischen den Beugungsordnungen einzustellen.

6. Holographisches Rekonstruktionssystem nach Anspruch 1, bei dem das optische Ablenkmittelfeld Elektrobenetzungszellen enthält.

7. Holographisches Rekonstruktionssystem nach Anspruch 6, bei dem die Seitenwände der Elektrobenetzungszellen so ausgeführt sind, dass sie reflektiertes Streulicht absorbieren.

8. Holographisches Rekonstruktionssystem nach Anspruch 6, bei dem die Seitenwände der Elektrobenetzungszellen hydrophob und elektrisch isolierend sind.

9. Holographisches Rekonstruktionssystem nach Anspruch 6, das Mittel zu elektrostatischen Schirmung zwischen den Elektrobenetzungszellen aufweist.

10. Holographisches Rekonstruktionssystem nach Anspruch 6, das leitende transparente Mittel als Deckel für die Elektrobenetzungszellen aufweist.

11. Holographisches Rekonstruktionssystem nach Anspruch 6, das Mittel zu Temperaturkompensation der Elektrobenetzungszellenstruktur aufweist.

## Claims

1. Holographic reconstruction system for the three-dimensional reconstruction of object light points of a scene, the holographic reconstruction system comprising:
- Illumination means (LQ1 ... LQ4) for generating light waves being capable for interference,
- Spatial light modulator means (SLM) for the modulation of the light waves being capable for interference with at least one video hologram,
- Optical focussing means (LA) for focusing the light waves on at least one eye position (EP_{R}/EP_{L}) of observer eyes,
- Controllable electro-optic deflection means (DM) for directing the focussed, modulated light waves with the reconstructed object light points at at least one eye position (EP_{R} or EP_{L}), and for tracking the eye position when the eye position changes, and
- a system controller (SC) to control the electro-optic deflection means (DM),
**characterised in that** the controllable electro-optic deflection means (DM) are an array of deflection means with electronically addressable micro-cells (DMC), which comprise such a periodic structure in a cell grid that the separately controllable micro-cells (DMC) realise the function of a controllable diffraction grating with variable surface relief structure under coherent illumination, where the optical diffraction behaviour within diffraction orders in a diffraction spectrum of the surface relief structure is changeable by the system controller (SC).

2. Holographic reconstruction system according to claim 1, where the array of deflection means is operatable as a phase grating in order to minimise the light loss when directing the modulated wave field.

3. Holographic reconstruction system according to claim 1, where such prism angles in the electronically addressable micro-cells (DMC) of the array of deflection means are adjustable by the system controller (SC) that in the grating diffraction spectrum of the array of deflection means the grating diffraction order which exhibits the greatest diffraction efficiency lies closest to the target direction of the current eye position (EP), and where the system controller (SC) varies the angle of incidence of the illumination means (LQ1...LQ4) in order to minimize the deviation error of this grating diffraction order from the target direction, so that the exiting wave field which is capable of generating interference is directed at the desired eye position.

4. Holographic reconstruction system according to claim 3, with a control unit for moving the light sources (LQ1...LQ4) in order to compensate the deviation error of the grating diffraction order from the target direction.

5. Holographic reconstruction system according to claim 3, where the system controller is adapted such that the deflection of the light waves which are capable of generating interference is variable between adjacent diffraction orders in the diffraction spectrum by combining multiple micro-cells to form an adjustable phase grid in order to adjust deflection values between the diffraction orders.

6. Holographic reconstruction system according to claim 1, where the array of optical deflection means comprises electrowetting cells.

7. Holographic reconstruction system according to claim 6, where the side walls of the electrowetting cells are designed such that they absorb reflected diffused light.

8. Holographic reconstruction system according to claim 6, where the side walls of the electrowetting cells are hydrophobic and electrically insulating.

9. Holographic reconstruction system according to claim 6, which comprises means for electrostatic shielding between the electrowetting cells.

10. Holographic reconstruction system according to claim 6, which comprises conductive transparent means which serve as cover for the electrowetting cells.

11. Holographic reconstruction system according to claim 6, which comprises means for temperature compensation of the electrowetting cells.

## Revendications

1. Système de reconstitution holographique pour la reconstitution tridimensionnelle de points lumineux objets d'une scène, qui contient:
- des moyens d'éclairage (LQ1...LQ4) pour la production d'ondes lumineuses capables d'interférences,
- des moyens de modulation lumineuse dans l'espace (SLM) pour la modulation des ondes lumineuses capables d'interférences avec au moins un hologramme vidéo,
- des moyens de focalisation optiques (LA) pour la focalisation des ondes lumineuses vers au moins une position oculaire (EP_{R}/EP_{L}) d'yeux qui observent
- des moyens de déviation électro-optiques (DM) pouvant être commandés pour l'alignement des ondes lumineuses modulées focalisées avec les points lumineux objets reconstitués sur au moins une position oculaire (EP_{R} ou EP_{L}) et pour le suivi de la position oculaire lors d'un changement de position, et
une commande système (SC) pour le pilotage des moyens de déviation électro-optiques (DM),
**caractérisé en ce que** les moyens de déviation électro-optiques (DM) pouvant être commandés sont un champ de moyens de déviation avec des microcellules (DMC) électroniquement adressables qui présentent dans une trame de cellules une structure périodique telle que les microcellules (DMC) pouvant être pilotées séparément assurent, sous l'éclairage cohérent, la fonction d'un réseau de diffraction pouvant être commandé, avec une structure de relief de surface variable, réseau dans le cas duquel le comportement de diffraction optique peut être modifié par la commande système (SC) à l'intérieur d'ordres de diffraction dans un spectre de diffraction de la structure de relief de surface.

2. Système de reconstitution holographique selon la revendication 1, dans lequel le champ de moyens de déviation peut être exploité en tant que réseau de phase pour minimiser les pertes lumineuses lors de l'alignement du champ d'ondes modulé.

3. Système de reconstitution holographique selon la revendication 1, dans lequel la commande système (SC) pour les microcellules (DMC) électroniquement adressables du champ de moyens de déviation permet de régler des angles de prisme tels que, dans le spectre de diffraction de réseau du champ de moyens de déviation, l'ordre de diffraction de réseau avec le plus grand degré d'action de diffraction se situe le plus près de la direction visée de la position oculaire actuelle (EP), et dans lequel la commande système (SC) fait varier l'angle d'incidence lumineuse des moyens d'éclairage (LQ1...LQ4) pour minimiser l'erreur de divergence de cet ordre de diffraction de réseau par rapport à la direction visée de sorte que le champ d'ondes capable d'interférences sortant conduit à la position oculaire souhaitée.

4. Système de reconstitution holographique selon la revendication 3, avec un dispositif de commande pour le déplacement des sources lumineuses (LQ1...LQ4) pour compenser l'erreur de divergence de l'ordre de diffraction de réseau par rapport à la direction visée.

5. Système de reconstitution holographique selon la revendication 3, dans lequel la commande système est conçue de sorte que la déviation des ondes lumineuses capables d'interférences est variable entre des ordres de diffraction voisins dans le spectre de diffraction par la réunion de plusieurs microcellules en une trame de phases réglable pour régler des valeurs de déviation entre les ordres de diffraction.

6. Système de reconstitution holographique selon la revendication 1, dans lequel le champ de moyens de déviation optique contient des cellules d'électro-mouillage.

7. Système de reconstitution holographique selon la revendication 6, dans lequel les parois latérales des cellules d'électro-mouillage sont réalisées de sorte qu'elles absorbent la lumière diffusée réfléchie.

8. Système de reconstitution holographique selon la revendication 6, dans lequel les parois latérales des cellules d'électro-mouillage sont hydrophobes et électriquement isolantes.

9. Système de reconstitution holographique selon la revendication 6, qui présente des moyens de blindage électrostatique entre les cellules d'électro-mouillage.

10. Système de reconstitution holographique selon la revendication 6, qui présente des moyens transparents conducteurs en tant que couvercle pour les cellules d'électro-mouillage.

11. Système de reconstitution holographique selon la revendication 6, qui présente des moyens de compensation de température de la structure de cellules d'électro-mouillage.
